# FASCICULE DE BREVET EUROPEEN

(11) **EP 2 443 073 B1**
(45) Date de publication et mention de la délivrance du brevet: **16.07.2014**
(21) Numéro de dépôt: 10734241.2
(22) Date de dépôt: 07.06.2010
(51) Int. Cl.: C04B 7/32, C04B 7/345

(54) **PROCEDE INDUSTRIEL DE FABRICATION DE CLINKER A HAUTE TENEUR EN BELITE**
TECHNISCHES VERFAHREN ZUR HERSTELLUNG EINES KILNKERS MIT HOHEM BELITGEHALT
INDUSTRIAL METHOD FOR PRODUCING A CLINKER HAVING A HIGH BELITE CONTENT

(30) Priorité: 17.06.2009 FR 0902938
(43) Date de publication de la demande: 25.04.2012
(73) Titulaire: Lafarge, 75116 Paris (FR)
(72) Inventeur: WALENTA, Gunther, F-69740 Genas (FR); COMPARET, Cédric, F-38460 Optevoz (FR); MORIN, Vincent, F-69003 Lyon (FR)
(74) Mandataire: Berruet, Laure
(86) Numéro de dépôt international: PCT/FR2010/051115
(87) Numéro de publication internationale: WO 2010/146281

(56) Documents cités:
- FR-A1- 2 873 366
- US-A- 4 798 628
- MEHTA P K: "INVESTIGATIONS ON ENERGY-SAVING CEMENTS" WORLD CEMENT TECHNOLOGY, CEMENT AND CONCRETE ASSOCIATION, LONDON, GB, 1 mai 1980 (1980-05-01), pages 166-177, XP008044077 ISSN: 0308-8855
- MAJLING J ET AL: "GENERALIZED BOGUE COMPUTATIONS TO FORECAST THE MINERALOGICAL COMPOSITION OF SULFOALUMINATE CEMENTS BASED ON FLY ASHES" ADVANCES IN CEMENT RESEARCH, LONDON, GB, vol. 11, no. 1, 1 janvier 1999 (1999-01-01), pages 27-34, XP008044126 ISSN: 0951-7197
- ARJUNAN P ET AL: "Sulfoaluminate-belite cement from low-calcium fly ash and sulfur-rich and other industrial by-products" CEMENT AND CONCRETE RESEARCH, PERGAMON PRESS, ELMSFORD, NY, US LNKD- DOI:10.1016/S0008-8846(99)00072-1, vol. 29, no. 8, 1 janvier 1999 (1999-01-01), pages 1305-1311, XP002320781 ISSN: 0008-8846

## Description

La présente invention se rapporte à un procédé industriel de fabrication de clinker à haute teneur en bélite.

Les clinkers à haute teneur en bélite sont des clinkers à faible teneur en alite ou absence d'alite, qui est une des phases minérales des clinkers traditionnels du type Portland.

Des clinkers à haute teneur en bélite ont été développés par les industriels. Ces clinker présentent en outre comme avantage de réduire significativement les émissions de CO2 comparativement à la fabrication des clinkers du type Portland.

Ces clinkers à haute teneur en bélite produisent des ciments dont les résistances mécaniques satisfont ou surpassent les exigences normatives, et les performances requises dans les applications des bétons modernes actuels.

Cependant la fabrication de ces clinkers à haute teneur en bélite dans des fours traditionnels pour les clinkers du type Portland nécessite des indicateurs de cuisson additionnels et adaptés à leur fabrication.

Le document MEHTA P.K. : "Investigations on energy-saving cements", World Cement Technology, Cement and Concrete Association, London, GB, 1 mai 1980, pages 166-177, SSN : 0308-8855, XP008044077, divulgue un procédé de laboratoire mis en oeuvre avec un four électrique et des produits de départ de haute pureté. Ce procédé n'est pas envisageable à l'échelle industrielle.

Aussi le problème que se propose de résoudre l'invention est de fournir un nouveau procédé industriel de fabrication de clinker à haute teneur en bélite.

De manière inattendue, les inventeurs ont mis en évidence qu'il est possible de réaliser un clinker à haute teneur en bélite dans un four traditionnel de cimenterie en respectant certaines prescriptions.

Dans ce but la présente invention propose un procédé de fabrication de clinker comprenant de 40 à 75% de bélite, % exprimé en masse par rapport à la masse totale de clinker, comprenant les étapes suivantes :
(i) introduire un cru dans une chambre de calcination d'un four de cimenterie;
   le cru comprenant au moins une source de calcium, une source de silice, une source d'alumine, une source de fer, une source de soufre, une source de bore ;
(ii) calciner le cru à une température comprise de 1150°C à 1375°C ;
(iii) mesurer le poids au litre du produit issu de l'étape (ii) et éliminer le produit ayant un poids au litre strictement inférieur à 650 g/litre ;
(iv) mesurer la quantité de SO₃ dans le produit issu de l'étape (ii) et éliminer le produit présentant un rapport de quantité de SO₃ du cru décarbonaté / quantité de SO₃ dans le produit issu de l'étape (ii) inférieur ou égal à 0,75 et supérieur ou égal à 1,2;
(v) mesurer la quantité de chaux libre (CaOl) dans le produit issu de l'étape (ii) et éliminer le produit ayant une quantité de chaux libre strictement supérieure à 1,5 %, pourcentage en masse de chaux libre dans le produit issu de l'étape (ii).

L'invention offre au moins un des avantages déterminants décrits ci-après.

Avantageusement, le procédé selon l'invention peut être mis en oeuvre dans tous les fours de cimenteries, y compris les fours traditionnels utilisés pour fabriquer le clinker du type Portland.

L'invention offre comme autre avantage que le procédé selon l'invention nécessite des températures de cuisson plus faibles que celles requises pour la fabrication du clinker du type Portland.

Un autre avantage de la présente invention est que les indicateurs de suivi de la cuisson (c'est-à-dire les étapes (iii), (iv) et (v)) peuvent être facilement mis en oeuvre dans une cimenterie.

De plus, le procédé selon l'invention ne nécessite pas un four de cimenterie spécifique.

L'invention offre comme autre avantage que le procédé selon l'invention de fabrication du clinker à haute teneur en bélite permet de réduire l'énergie nécessaire d'environ 20% comparativement à un procédé de fabrication de clinker Portland.

Enfin, l'invention offre comme autre avantage que le procédé selon l'invention de fabrication du clinker à haute teneur en bélite permet de réduire les émissions de CO₂ d'environ 20% comparativement à un procédé de fabrication de clinker Portland.

D'autres avantages et caractéristiques de l'invention apparaîtront clairement à la lecture de la description et des exemples donnés à titre purement illustratifs et non limitatifs qui vont suivre.

Pour la suite de l'exposé de l'invention, les notations abrégées suivantes seront utilisées, sauf indication contraire explicite, pour désigner les composants minéralogiques du ciment :
- C représente CaO (chaux), et CaOl représente la chaux libre non combinée dans le clinker,
- A représente Al₂O₃ (alumine),
- F représente Fe₂O₃,
- S représente SiO₂ (silice),
- T représente le TiO2,
- $ représente SO₃.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique obtenu selon l'invention peut en particulier être un ciment. De préférence, le liant hydraulique obtenu selon l'invention est un ciment.

Par l'expression « ciment Portland », on entend selon l'invention un ciment de type CEM I, CEM II, CEM III, CEM IV ou CEM V selon la norme « Ciment » NF EN 197-1.

Par l'expression « clinker Portland », on entend selon l'invention un clinker tel que défini dans la norme « Ciment » NF EN 197-1.

Par le terme « feldspaths », on entend selon l'invention un minéral à base de silicate double d'aluminium, de potassium, de sodium ou de calcium. Les feldspaths sont de la famille des tectosilicates. Il existe de nombreux feldspaths dont les principaux sont l'orthose, l'albite et l'anorthite. Le mélange de ces deux derniers donne la série des plagioclases.

Par le terme « clinker », on entend selon l'invention le produit obtenu après cuisson (la clinkérisation) d'un mélange (le cru).

Par les termes suivants, on entend selon la présente invention :
- C₃S: Silicate tricalcique impur (Ca₃SiO₅): (Alite) 3(CaO)•(SiO₂)
- C₂S: Silicate bicalcique impur (Ca₂SiO₄) : (Bélite) 2(CaO)•(SiO₂)
- C₃A: Aluminate tricalcique (Ca₃Al₂O₆) : (Aluminate) 3(CaO)•(Al₂O₃)
- C₄AF: Ferro-aluminate tétracalcique (Ca₄Al₂Fe₂O₁₀) : (Ferrite ou aluminoferrite ou brownmillerite) 4(CaO)•(Al₂O₃)•(Fe₂O₃), ou plus généralement un composé de formule générale 2(CaO)•x(Al₂O₃)•(1-x)(Fe₂O₃) avec X de 0,2 à 0,8
- C₄A₃$, : sulfoaluminate de calcium « ye'elimite » 4(CaO)•3(Al₂O₃)•(SO₃)
- Calcaire (limestone) : CaCO₃
- Gypse : CaS0₄•2(H₂O) ;
- Sulfate de calcium semihydrate : CaSO4•0.5H₂O;
- Sulfate de calcium anhydre : CaSO4;
- Périclase : MgO ;
- Sable, silice : SiO₂.

Par le terme « phase », on entend selon l'invention une phase minéralogique.

Par le terme « élément », on entend selon l'invention un élément chimique selon le tableau périodique des éléments.

Par le terme «argile», on entend selon la présente invention une roche sédimentaire, composée pour une large part de minéraux spécifiques, silicates en général d'aluminium plus ou moins hydratés, qui présentent une structure feuilletée (phyllosilicates), ou bien une structure fibreuse (sépiolite et palygorskite).

Par le terme « prise », on entend selon la présente invention le passage à l'état solide par réaction chimique d'hydratation du liant hydraulique. La prise est généralement suivi par la période de durcissement.

Par le terme « durcissement», on entend selon la présente invention l'acquisition des propriétés mécaniques d'un liant hydraulique, après la fin de la prise.

Tout d'abord la présente invention a pour objet un procédé de fabrication de clinker comprenant de 40 à 75% de bélite, % exprimé en masse par rapport à la masse totale de clinker, comprenant les étapes suivantes :
(i) introduire un cru dans une chambre de calcination d'un four de cimenterie;
   le cru comprenant au moins une source de calcium, une source de silice, une source d'alumine, une source de fer, une source de soufre, une source de bore ;
(ii) calciner le cru à une température comprise de 1150°C à 1375°C ;
(iii) mesurer le poids au litre du produit issu de l'étape (ii) et éliminer le produit ayant un poids au litre strictement inférieur à 650 g/litre ;
(iv) mesurer la quantité de SO₃ dans le produit issu de l'étape (ii) et éliminer le produit présentant un rapport de quantité de SO₃ du cru décarbonaté / quantité de SO₃ dans le produit issu de l'étape (ii) inférieur ou égal à 0,75 et supérieur ou égal à 1,2;
(v) mesurer la quantité de chaux libre (CaOl) dans le produit issu de l'étape (ii) et éliminer le produit ayant une quantité de chaux libre strictement supérieure à 1,5 %, pourcentage en masse de chaux libre dans le produit issu de l'étape (ii).

Le procédé selon l'invention permet de fabriquer un clinker à haute teneur en bélite, comprenant de 40 à 75% de bélite, de préférence de 45 à 70% de bélite, préférentiellement de 45 à 65% de bélite, plus préférentiellement de 50 à 60% de bélite % exprimé en masse par rapport à la masse totale de clinker.

L'étape (i) peut être réalisée en introduisant un cru sous forme de poudre (voie sèche) de granules (voie semi-sèche) ou sous forme de pâte liquide (voie humide ou semi-humide). Par la voie sèche, le cru est introduit directement dans le four sous forme pulvérulente, après éventuellement un préchauffage dans éventuellement une tour à échangeurs thermiques. Par la voie semi-sèche, avant introduction dans le four, le cru est transformé en "granules" par humidification dans de grandes « assiettes » rotatives inclinées. Par la voie humide, le cru est mélangé avec de l'eau pour former une pâte liquide. La pâte est ensuite stockée dans de grands bassins de plusieurs milliers de mètres cubes, où elle est continuellement malaxée et homogénéisée. Ce mélange est appelé le cru. La pâte est ensuite envoyée à l'entrée d'un four chauffé à son extrémité par une flamme intérieure.

De préférence, l'étape (i) est réalisée par voie semi-sèche en introduisant un cru sous forme de granules.

Le cru peut comprendre des matières premières naturelles, extraites de carrières.

Le cru introduit à l'étape (i) comprend au moins une source de calcium, une source de silice, une source d'alumine, une source de fer, une source de soufre, une source de bore.

De préférence, les matière premières d'alimentation (appelées matières premières) pouvant convenir pour réaliser le cru introduit à l'étape (i) sont :
- une source de calcium comme par exemple le calcaire, l'argile, la marne, l'aragonite, la craie, la pierre de ciment, les coquillages marins, les cendres volantes, les pouzolanes, ou les résidus de calcination des ordures ménagères ; la source de calcium peut provenir de carrières ou résulter d'un procédé industriel. Les sous-produits de divers procédés industriels conviennent également pour être utilisés comme sources de chaux. Par exemple certains résidus provenant d'épurateurs de gaz de fumée contiennent une quantité de chaux considérable. La poussière de four est également bien appropriée; on la recueille normalement à la sortie des fours à ciment classiques ;

- une source de silice comme par exemple, une argile, une marne, une cendre volante, une pouzzolane, une fumée de silice, les schistes, l'ardoise ou le sable; la source de silice peut provenir de carrières ou résulter d'un procédé industriel, comme par exemple les laitiers.
- une source d'alumine comme par exemple une argile, une marne, une cendre volante, une pouzolane, une bauxite, une boue rouge d'alumine notamment une boue d'alumine provenant de déchets industriels au cours de l'extraction de l'alumine, les latérites, les anorthosites, les albites, les feldspaths ; la source d'alumine peut provenir de carrières ou résulter d'un procédé industriel ou ses déchets ; souvent on trouve la silice et l'alumine ensemble dans la nature, aussi bien que dans les sous produits du genre scorie résultant de nombreux procédés industriels, de sorte que bien souvent la source de silice servira également de source d'alumine ;
- une source de fer comme par exemple l'oxyde de fer, le minerai de fer ; la source de fer peut provenir de carrières ou résulter d'un procédé industriel ou de nombreuses substances argileuses ;
- une source de soufre comme par exemple un sel de sulfate ou encore le soufre present dans le combustible utilisé pour chauffer le four, qui réagit avec les autres matieres premières pendant le processus de clinkérisation et devient un composant dans le clinker final ou encore du gypse, du sulfate de calcium semihydraté (α ou β), ou encore du sulfate de calcium anhydre ; les sources de soufre convenant selon l'invention peuvent provenir de carrière, ou résultant d'un procédé industriel ;
- une source de bore comme par exemple le borax, l'acide borique, la colémanite ou tout autre composé contenant du bore; la source de bore peut provenir de carrières ou résulter d'un procédé industriel.

De plus les matières premières d'alimentation peuvent contenir d'autres éléments chimiques tels que par exemple MgO, Na₂O, K₂O, TiO₂, P₂O₅, SrO, Mn₂O₃, Cl, F.

Une autre source de chaux et principalement de silice est le silicate de calcium (CaO, SiO₂) que l'on trouve dans le laitier provenant de nombreux processus industriels. Par exemple les haut-fourneaux utilisés pour fabriquer de l'acier produisent une grande quantité de laitier.

La préparation du cru introduit à l'étape (i) peut être réalisée par mélange des matières premières. Les matières premières peuvent être mélangées préalablement à l'étape (i) par mise en contact, comprenant événtuellement une étape de broyage et/ou d'homogénéisation. De préférence, les matières premières du cru introduit à l'étape (i) sont événtuellement séchées avant l'étape (i) ou encore événtuellement calcinées avant l'étape (i).

Selon une variante de l'invention, le procédé comprend une étape de précalcination du cru.

D'autres matières premières peuvant être introduite pendant l'étape (i) comme par exemple :
- une source de magnésium comme par exemple un sel de magnésium ;
- une source de sodium comme par exemple un sel de sodium ;
- une source de potassium comme par exemple un sel de potassium ;
- une source de phosphore comme par exemple un sel de phosphore ;
- une source de zinc comme par exemple l'oxyde de zinc ;
- une source de manganèse comme par exemple l'oxyde de manganèse ;
- une source de titane comme par exemple l'oxyde de titane ;
- une source de fluor comme par exemple les sels de fluor ;
- une source de chlore comme par exemple les sels de chlore ;
ou leurs mélanges.

Ces matières premières peuvent être sous forme soit de poudre, soit de semi-solide, soit de liquide, ou soit de solide.

L'étape (ii) est une étape de calcination, ce qui signifie au sens de l'invention une étape de cuisson. Par calcination, on entend au sens de l'invention la réaction entre les éléments chimiques du cru.

La calcination a lieu a une température comprise de 1150°C à 1375°C, de préférence de 1200°C à 1325°C, encore plus préférentiellement de 1300°C à 1325°C.

De préférence, la calcination a lieu pendant au minimum 20 minutes, plus préférentiellement pendant au minimum 30 minutes, encore plus préférentiellement pendant au minimum 45 minutes. Le temps de calcination sera notamment fonction de la capacité du four et de la température choisie pour la cuisson.

La calcination a lieu de préférence dans une atmosphère suffisamment oxydante, comme par exemple l'air atmosphérique, mais d'autres atmosphères suffisamment oxydante peuvent convenir.

Le procédé selon l'invention peut se réaliser dans un four de cimenterie conventionnel (par exemple un four rotatif) ou dans un autre type de four (par exemple un four à passage). L'étape (i) peut se réaliser à partir d'un four rotatif ou un four électrique ou un four à passage ou tout autre type de four de cimenterie.

Les fours rotatifs varient en longueur et en diamètre. Ils tournent lentement et, comme ils sont légèrement inclinés, la charge descend lentement vers l'extrémité chaude du four. Il est de préférence chauffé à partir de son extrémité inférieure. On a besoin de matériaux réfractaires spéciaux, plus spécialement pour la zone très chaude à l'extrémité inférieure du four. De préférence, on choisit des matériaux réfractaires qui n'interagissent pas avec la phase liquide du clinker en cours de cuisson. Il est préférable que le four reste continuellement en fonctionnement, sans quoi le matériau réfractaire coûteux pourrait être endommagé par les chocs thermiques lors du refroidissement et du réchauffement. Généralement un four rotatif est chauffé en brûlant un combustible fossile à son extrémité inférieure, tandis que les gaz de combustion très chauds circulent dans le four en remontant. L'énergie thermique est transférée par contact direct aux matériaux introduits qui descendent et également de façon indirecte en chauffant la garniture réfractaire. Comme les matériaux introduits sont préférablement séchés, chauffés et partiellement calcinés par les gaz très chauds, une partie des particules les plus fines se rassemble et est transportée hors du four sous forme de poussière de four.

Au démarrage de l'installation et selon un des modes de réalisation de l'invention, les matières premières alimentent le broyeur, dans des proportions réglées de façon à fournir les composants dans le rapport convenable nécessaire pour la production de clinker. Les matières ainsi broyées alimentent le four.

Selon un mode de réalisation préféré du présent procédé, un croûtage est réalisé à partir de la phase liquide du clinker en cours de cuisson pour obtenir une garniture ou "croûte" de revêtement à l'intérieur du four, qui sert de matériau pour protéger l'enveloppe réfractaire du four.

Au moment de l'alimentation du four, il est préférable d'avoir une température suffisamment élevée pour provoquer le début de la réaction chimique de clinkérisation. Mais il convient d'éviter une temprérature trop élevée qui provoquerait un excès de phase liquide risquant de boucher le four par la formation d'un anneau et/ou de créer un flot de matière liquide.

La durée de l'étape (ii) de cuisson est spécifique de chaque four, et est déterminée en particulier à l'aide de la vitesse de rotation du four et/ou le débit d'alimentation.

L'étape (iii) du procédé selon l'invention est une mesure du poids au litre du produit issu de l'étape (ii) et une élimination de produit ayant un poids au litre strictement inférieure à 650 g/litre.

Plus particulièrement, au cours de l'étape (iii), le poids au litre du produit issu de l'étape (ii) est mesuré et le produit présentant un poids au litre supérieur ou égal à 650 g/litre, de préférence compris de 800 g/litre à 1250 g/litre, plus préférentiellement compris de 850 g/litre à 1200 g/litre, encore plus préférentiellement égal à 1050 g/litre n'est pas éliminé.

Le poids au litre est mesuré de la manière suivante : les granules de clinker sont sélectionnées dans une tranche granulaire comprise entre 5 et 10 mm, cette sélection est de préférence faîte avec des tamis. Ces granules de clinker sélectionnées sont ensuite introduites dans un récipient de contenance égale à 1 Litre. Après introduction des granules de clinker dans le récipient, le haut du récipient est arrasé avec une règle. Il est important que les granules de clinker ne dépassent pas du haut du récipient. La masse de clinker contenue dans ce litre est ensuite mesurée et on obtient le poids au litre exprimé en gramme de clinker / litre.

Selon une variante de l'invention, l'étape (iii) peut être remplacée par une autre étape qui est une étape de caractérisation de la densité apparente du produit issu de l'étape (ii). Un exemple de mesure directe de la densité apparente des granules de clinker serait d'utiliser la technique de porosimétrie au mercure. La densité apparente pourrait être mesurée de la manière suivante : les granules de clinker sont sélectionnées dans une tranche granulaire comprise entre 5 et 10 mm, cette sélection est de préférence faîte avec des tamis. Ces granules de clinker sélectionnées sont ensuite ouvertes ou scindées en deux parties pour permettre au mercure d'avoir accès aux pores. La mesure de porosité mercure est réalisée jusqu'à une pression d'environ 4000 bars. Cette mesure permet de calculer le pourcentage de porosité des granules et donc le poids au litre.

Il est également possible de procéder à la mesure de la densité apparente par d'autres techniques telles que la pesée hydrostatique : des granules de clinker sont mises dans un sac, la différence de masse des granules pesées dans l'air et dans l'eau permet de calculer la densité apparente des granules. ,

L'étape (iv) du procédé selon l'invention est une mesure de la quantité de SO₃ dans le produit issu de l'étape (ii) et une élimination du produit présentant un rapport de quantité de SO₃ du cru décarbonaté / quantité de SO₃ dans le produit issu de l'étape (ii) inférieur ou égal à 0,75 et supérieur ou égal à 1,2.

De préférence, l'étape (iv) du procédé selon l'invention est une mesure de la quantité de SO₃ dans le produit issu de l'étape (ii) et une élimination du produit présentant un rapport de quantité de SO₃ du cru décarbonaté / quantité de SO₃ dans le produit issu de l'étape (ii) inférieur ou égal à 0,80 et supérieur ou égal à 1,15.

Plus préférentiellement, l'étape (iv) du procédé selon l'invention est une mesure de la quantité de SO₃ dans le produit issu de l'étape (ii) et une élimination du produit présentant un rapport de quantité de SO₃ du cru décarbonaté / quantité de SO₃ dans le produit issu de l'étape (ii) inférieur ou égal à 0,90 et supérieur ou égal à 1,1.

Encore plus préférentiellement, on n'élimine pas le produit issu de l'étape (ii) présentant un rapport de quantité de SO₃ du cru décarbonaté / quantité de SO₃ dans le produit issu de l'étape (ii) égal à 1.

La quantité de SO₃ du cru décarbonaté correspond à un % massique de SO₃ par rapport à la quantité totale de l'ensemble des constituants chimiques déterminée sur le cru décarbonaté chauffé à 975°C.

La détermination de la quantité de SO₃ peut être faite par exemple par mesure de la fluorescence X, par exemple selon la norme NF EN 196-2.2 ou par méthode gravimétrique chimique, par exemple selon la norme NF EN 196-2, ou par analyse élémentaire. Dans le cas d'une analyse élémentaire, le dosage du SO3 peut être réalisé à l'aide d'un analyseur élémentaire infrarouge.

L'étape (v) du procédé selon l'invention est une mesure de la quantité de chaux libre (CaOl) dans le produit issu de l'étape (ii) et élimination du produit ayant une quantité de chaux libre strictement supérieure à 1,5%, pourcentage en masse de chaux libre dans le produit issu de l'étape (ii).

Selon une variante, le procédé selon l'invention comprend une étape de mesure de la quantité de chaux libre (CaOl) dans le produit issu de l'étape (ii), puis élimination du produit ayant une quantité de chaux libre strictement supérieure à 1,5% avec conservation du produit ayant une quantité de chaux libre inférieure ou égale à 1,5%, pourcentage en masse de chaux libre dans le produit issu de l'étape (ii).

De préférence, à l'étape (v) du procédé selon l'invention, le produit issu de l'étape (ii) ayant une quantité de chaux libre strictement supérieure à 1% est éliminé, pourcentage en masse de chaux libre dans le produit issu de l'étape (ii).

Plus préférentiellement, à l'étape (v) du procédé selon l'invention, le produit issu de l'étape (ii) ayant une quantité de chaux libre strictement supérieure à 0,5% est éliminé, pourcentage en masse de chaux libre dans le produit issu de l'étape (ii).

Encore plus préférentiellement, à l'étape (v) du procédé selon l'invention, le produit issu de l'étape (ii) ayant une quantité de chaux libre comprise entre 0 et 0,5% est conservé.

La détermination de quantité de chaux libre peut s'effectuer par l'une des méthodes traditionnellement utilisées dans le cas des ciments Portland qui peut être par exemple un dosage par analyse de spectre de diffraction X (exemple analyse DRX-Rietveld ou quantification sur la base du pic de CaOl), ou par dosage de type complexomètrie en présence d'EDTA après digestion dans une solution d'ethyleneglycol, ou par dosage de type acide-base après digestion dans une solution d'ethyleneglycol ou par conductimètrie après digestion dans une solution d'ethyleneglycol.

Après l'étape (v) du procédé selon l'invention, un clinker à haute teneur en bélite est obtenu.

De préférence l'étape (v) est suivie d'une étape de refroidissement. Cette étape de refroidissement peut être réalisée par exemple par projection d'eau sur le clinker sortant du four, ou par soufflage d'air.

De préférence, le clinker à haute teneur en bélite obtenu selon l'invention ne comprend pas de phases minéralogiques C₂AS et/ou C₁₂Al₇ et/ou C₃S et/ou CT.

Le clinker à haute teneur en bélite peut comprendre des traces des phases minéralogiques C₂AS et/ou C₁₂A₇ et/ou C₃S et/ou CT.

Le clinker à haute teneur en bélite peut comprendre de 0,1 à 1 % en masse de phases minéralogiques C₂AS et/ou C₁₂A₇ et/ou C₃S et/ou CT. Le clinker à haute teneur en bélite peut comprendre moins de 0,5% de phases minéralogiques C₃S, en particulier il peut comprendre de 0,01 à 0,5% de phases minéralogiques C₃S, en % exprimé en masse par rapport à la masse totale de clinker.

Par phase minéralogique C₂AS, on entend géhlénite.

Par phase minéralogique C₁₂A₇, on entend mayénite.

Par phase minéralogique C₃S, on entend alite.

Par phase minéralogique CT, on entend perovskite.

Le clinker obtenu par le procédé selon l'invention est un clinker à haute teneur en bélite, comprenant de préférence de 40 à 75% de bélite, préférentiellement de 45 à 70% de bélite, plus préférentiellement de 45 à 65% de bélite, encore plus préférentiellement de 50 à 60% de bélite, % exprimé en masse par rapport à la masse totale de clinker. Avantageusement il s'agit d'un clinker Bélite-Calcium-Sulphoalumineux-Ferrite (BCSAF) comprenant au moins en % exprimé en masse par rapport à la masse totale de clinker BCSAF
■ de 5 à 30 %, de phase aluminoferrite calcique d'une composition correspondant à la formule générale C₂A_{X}F₍₁₋ₓ₎, avec X compris de 0,2 à 0,8 ;
■ de 10 à 35 %, de phase sulfoaluminate de calcium « ye'elimite » C₄A₃$,
■ de 40 à 75% de bélite (C₂S),
■ de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

La bélite est une phase minéralogique bien connue de l'homme du métier, qui à l'état pur possède la composition Ca₂SiO₄ mais qui peut aussi contenir des impuretés.

La « ye'elimite » est une phase minéralogique qui à l'état pur possède la composition Ca₄Al₆SO₁₆ mais qui peut aussi contenir des impuretés.

La phase aluminoferrite est une phase minéralogique qui à l'état pur possède la formule C₂A_{X}F_{(1-X)}, avec X compris de 0,2 à 0,8 mais qui peut aussi contenir des impuretés.

Par impureté, on entend n'importe quel élément de la classification périodique des éléments.

Avantageusement, le total des pourcentages desdites phases du clinker BCSAF est supérieur ou égal à 97 %, de préférence supérieur ou égal à 98 %, plus préférentiellement supérieur ou égal à 99 %, encore plus préférentiellement égal à 100%.

De préférence, les phases minéralogiques du clinker BCSAF comprennent en outre un ou plusieurs éléments secondaires choisis parmi le magnésium, le sodium, le potassium, le bore, le phosphore, le zinc, le manganèse, le titane, le fluor, le chlore.

Les phases minéralogiques du clinker BCSAF peuvent comprendre comme éléments majeurs le calcium, l'aluminium, la silice, le fer, l'oxygène et le soufre.

Le clinker BCSAF peut comprendre au moins les oxydes principaux suivants présents dans les proportions relatives, % exprimées en masse par rapport à la masse totale de clinker BCSAF:
CaO : 45 à 61 %
Al2O3 : 8 à 22 %
SiO2 : 15 à 25 %
Fe2O3: 3 à 15 %
SO₃ : 2 à 10%.

Les phases minéralogiques du clinker BCSAF peuvent comprendre de un à plusieurs éléments secondaires, en % exprimé en masse par rapport à la masse totale de clinker BCSAF, choisis parmi le magnésium, le sodium, le potassium, le bore, le phosphore, le zinc, le manganèse, le titane, le fluore, le chlore, présents préférentiellement dans les quantités suivantes:
- de 0 à 5% de magnésium exprimé en oxyde de magnésium,
- de 0 à 5% de sodium exprimé en oxyde de sodium,
- de 0 à 5% de potassium exprimé en oxyde de potassium,
- de 0 à 3% de bore exprimé en oxyde de bore,
- de 0 à 7% de phosphore exprimé en anhydride phosphorique,
- de 0 à 5% de zinc, manganèse, titane ou leur mélange, exprimé en oxydes de ces éléments,
- de 0 à 3% de fluorure, de chlorure, ou leur mélange, exprimé en fluorure de calcium et chlorure de calcium,
la teneur totale desdits éléments secondaires étant inférieure ou égale à 15%.

Les phases minéralogiques du clinker BCSAF peuvent comprendre, en % exprimé en masse par rapport à la masse totale de clinker BCSAF, de manière préférentielle les éléments secondaires suivants :
- de 1 à 4% de magnésium exprimé en oxyde de magnésium,
- de 0,1 à 2% de sodium exprimé en oxyde de sodium,
- de 0,1 à 2% de potassium exprimé en oxyde de potassium,
- de 0 à 2% de bore exprimé en oxyde de bore,
- de 0 à 4% de phosphore exprimé en anhydride phosphorique,
- de 0 à 3 % de zinc, manganèse, titane ou leur mélange, exprimé en oxydes de ces éléments,
- de 0 à 1% de fluorure, de chlorure, ou leur mélange, exprimé en fluorure de calcium et chlorure de calcium.

Les phases minéralogiques du clinker BCSAF peuvent comprendre, en % exprimé en masse par rapport à la masse totale de clinker BCSAF, de manière préférentielle les éléments secondaires suivants :
- de 0,2 à 1,5 % de sodium exprimé en oxyde de sodium,
- de 0,2 à 1,5 % de potassium exprimé en oxyde de potassium,
- de 0,2 à 2% de bore exprimé en oxyde de bore,
- de 0 à 1% de fluorure plus chlorure, ou leur mélange, exprimé en fluorure de calcium et chlorure de calcium.

De manière préférentielle, les phases minéralogiques du clinker BCSAF peuvent comprendre, en % exprimé en masse par rapport à la masse totale de clinker BCSAF, les éléments secondaires suivants :
- de 0,2 à 2% de bore exprimé en oxyde de bore ;
- de 0,1 à 2% de potassium exprimé en oxyde de potassium.

D'une autre manière préférentielle, les phases minéralogiques du clinker BCSAF peuvent comprendre, en % exprimé en masse par rapport à la masse totale de clinker BCSAF, les éléments secondaires suivants :
- de 0,2 à 2% de bore exprimé en oxyde de bore ;
- de 0,1 à 2% de sodium exprimé en oxyde de sodium.

D'une autre manière préférentielle, les phases minéralogiques du clinker BCSAF peuvent comprendre, en % exprimé en masse par rapport à la masse totale de clinker BCSAF, l'élément secondaire suivant :
- de 0,2 à 2% de bore exprimé en oxyde de bore.

D'une autre manière préférentielle, les phases minéralogiques du clinker BCSAF peuvent comprendre, en % exprimé en masse par rapport à la masse totale de clinker BCSAF, les éléments secondaires suivants :
- de 0,2 à 2% de potassium exprimé en oxyde de potassium;
- de 0,5 à 4% de phosphore exprimé en oxyde de phosphore (P₂O₅).

D'une autre manière préférentielle, les phases minéralogiques du clinker BCSAF peuvent comprendre, en % exprimé en masse par rapport à la masse totale de clinker BCSAF, les éléments secondaires suivants :
- de 0,2 à 2% de potassium exprimé en oxyde de potassium;
- de 0,5 à 4% de phosphore exprimé en oxyde de phosphore (P₂O₅) ;
- moins de 0,1% de bore exprimé en oxyde de bore ;

Selon une variante de l'invention, le clinker BCSAF obtenu selon l'invention ne comprend pas de borax, ou de bore ou de composé comprenant du bore.

Les exemples suivants illustrent l'invention sans en limiter la portée.

### EXEMPLES : Synthèse de ciment bélitique réalisée en four rotatif de type cimenterie.

La synthèse décrite ci-après comprend les étapes :
- de préparation des matières premières : broyage
- de préparation du cru : mélange des matières premières et granulation
- de préparation du clinker : cuisson du cru dans un four rotatif de type cimenterie
- de préparation du ciment : broyage et sulfatage
- de détermination des performances mécaniques sur mortiers selon la norme EN 196-1

### 1) Préparation des matières premières

La composition chimique cible de notre cru a été obtenu par mélange de six matières premières dont les compositions chimiques sont précisées dans le tableau suivant :

| % | **CaO** | **Al2O3** | **SiO2** | **Fe2O3** | **SO3** | **MgO** | **TiO2** | **K2O** | **Na2O** | **B2O3** | **autres** |
|---|---|---|---|---|---|---|---|---|---|---|---|
| Calcaire | 54.64 | 0.32 | 0.44 | 0.06 | 0.00 | 0.71 | 0.00 | 0.04 | 0.08 | 0.00 | 0.00 |
| Argile | 1.32 | 35.71 | 46.11 | 1.07 | 0.00 | 0.48 | 0.10 | 2.20 | 0.49 | 0.00 | 0.00 |
| sulfate de calcium anhydre | 40.80 | 0.18 | 0.36 | 0.12 | 56.84 | 0.00 | 0.00 | 0.00 | 0.00 | 0.00 | 0.00 |
| Oxyde de fer | 0.00 | 0.00 | 1.89 | 95.30 | 0.00 | 0.03 | 0.05 | 0.00 | 0.00 | 0.00 | 0.67 |
| Bauxite | 1.04 | 82.65 | 7.58 | 2.12 | 0.00 | 0.36 | 3.93 | 0.89 | 0.18 | 0.00 | 0.00 |
| Acide borique (H₃BO₃) | 0.00 | 0.00 | 0.00 | 0.00 | 0.00 | 0.00 | 0.00 | 0.00 | 0.00 | 56.3 | 0.00 |

La préparation de ces matières premières (sauf l'acide borique déjà sous forme de poudre) a consisté en une étape de broyage séparé, à l'aide d'un broyeur à boulet conventionnels de façon à présenter 5% maximum de refus à 100µm excepté pour le calcaire pour lequel 7,6% de refus à 100µm ont été obtenus en raison de l'aspect colmatant de ce produit (pourcentage en masse).

| **Matières premières** | **Refus à 100µm (% en masse)** |
|---|---|
| Argile | 3.1% |
| Anhydrite | 0.5% |
| Calcaire | 7.6% |
| Bauxite | 2.4% |
| Oxyde de fer | 0.1% |

### 2) Mélange des matières premières et granulation du cru

Les matières premières préparées à l'étape 1) auxquelles s'ajoute l'acide borique ont été mélangées et homogénéisées à l'aide d'une installation de type cyclone équipé d'une pale qui provoque un brassage de l'air et des particules solides présentes dans la cuve. Le temps de brassage a été fixé à 1H30 afin de garantir la parfaite homogénéisation du mélange.

| | **Calcaire** | **Argile** | **Sulfate de calcium anhydre** | **Oxyde de fer** | **Bauxite** | **H3BO3** |
|---|---|---|---|---|---|---|
| **% dans le mélange** | 60.12% | 22.87% | 6.1% | 4.67% | 4.50% | 1.74% |

Le mélange ainsi obtenu appelé cru est alors granulé à l'aide d'assiette à granuler standard.

Le cru granulé est séché en étuve à 105°C afin d'obtenir des granules parfaitement sèches au moment de leur introduction dans le four.

### 3) Cuisson du cru granulé et obtention d'un clinker bélitique

L'étape de cuisson du cru (étape (ii) selon l'invention) a été menée dans un four rotatif de 16m de longueur pour 1m de diamètre intérieur chauffé par une tuyère air-fioul. La vitesse du four a été fixée à 1.2 tour/min et le débit d'alimentation en cru à 350 kg/h. Un pyromètre laser a été installé de façon à mesurer la température du clinker au 2/3 environ de la longueur de la flamme soit dans la zone dite de clinkérisation.

La procédure suivie lors de cette cuisson a été la suivante :
- mise en chauffe du four progressive et selon la même procédure que pour un ciment Portland jusqu'à 1100°C (mesurée à l'aide du pyromètre) ;
- début de l'introduction du cru granulé et augmentation de la température du four jusqu'à 1200-1225°C ;
- attente de stabilisation thermique pendant 1H ;
- augmentation progressive pendant environ 45minutes de la température du four jusqu'à 1300-1325°C ;
- stabilisation de la température du four entre 1300 et 1325°C.

Après être sorti du four, le clinker subit un refroidissement à l'air ambiant dans un tube rotatif muni de releveurs qui permettent d'assurer un bon contact et un bon échange clinker-air.

Des échantillons de 6 à 8 kg de clinkers ont été prélevés à intervalles réguliers de 30minutes environ pour essais de caractérisation physico-chimiques ultérieurs qui ont consisté en la :
- mesure du poids au litre sur granules de clinker (étape (iii) selon l'invention) selon la méthode décrite précédemment dans la description;
- détermination de la teneur en SO₃ dans le clinker (**SO₃ Ck**) par analyseur élémentaire infrarouge (étape (iv) selon l'invention) ;
- détermination de la teneur en CaO libre (étape (v) selon l'invention) par diffraction de rayons X (DRX) associé à une analyse Rietveld.

### 4) Préparation du ciment

La phase de préparation du ciment à partir du clinker prélevé à l'étape précédente est réalisé à l'aide d'un broyeur à boulets conventionnel en présence de 10% en masse d'anhydrite (identique à celle ayant servie à la préparation du cru).

Des essais de résistances mécaniques en compression (Rc) sur mortiers ont été menés conformément aux indications de la norme EN 196-1.

Le tableau ci-après illustre les résultats qui ont été obtenus en ce qui concerne

| **Poids au litre (g/L)** | **Rc à 28 jours (Mpa)** | **% SO₃ Ck** | **%SO₃ cru** | **%SO₃ cru/%SO₃ckr** | **CaO libre (%)** |
|---|---|---|---|---|---|
| 610 | * | 4.83 | 5.00 | 1.04 | 1.25 |
| 810 | 55.64 | 4.85 | 5.00 | 1.03 | 0.22 |
| 1030 | 51.14 | 4.80 | 5.00 | 1.04 | 0.29 |
| 1450 | 45.26 | 4.80 | 5.00 | 1.04 | 0.25 |
| 1292 | 40.07 | 4.81 | 5.00 | 1.04 | 0.27 |
| 1329 | 44.86 | 4.61 | 5.00 | 1.08 | 0.25 |
| 1460 | 48.34 | 4.68 | 5.00 | 1.07 | 0.28 |
| 1495 | 38.52 | 4.77 | 5.00 | 1.05 | 0.31 |
| 1418 | 48.34 | 4.47 | 5.00 | 1.12 | 0.47 |
| 1331 | 39.09 | 4.64 | 5.00 | 1.08 | 0.41 |
| 1103 | 41.79 | 4.54 | 5.00 | 1.10 | 0.15 |
| 1070 | 42.69 | 4.40 | 5.00 | 1.14 | 0.18 |
| 1046 | 40.05 | 4.32 | 5.00 | 1.16 | 0.23 |
| 915 | 54.22 | 4.52 | 5.00 | 1.11 | 0.18 |
| 643 | * | 4.82 | 5.00 | 1.04 | 1.2 |

| | | | | | |
|---|---|---|---|---|---|
| * ces ciments ne permettent pas une mise en place correcte dans les moules aciers servant à l'élaboration des éprouvettes de mortiers. | | | | | |

## Revendications

1. Procédé de fabrication de clinker comprenant de 40 à 75% de bélite, % exprimé en masse par rapport à la masse totale de clinker, comprenant les étapes suivantes :
(i) introduire un cru dans une chambre de calcination d'un four de cimenterie, le cru comprenant au moins une source de calcium, une source de silice, une source d'alumine, une source de fer, une source de soufre, une source de bore;
(ii) calciner le cru à une température comprise de 1150°C à 1375°C ;
(iii) mesurer le poids au litre du produit issu de l'étape (ii) et éliminer le produit ayant un poids au litre strictement inférieur à 650 g/litre ;
(iv) mesurer la quantité de SO₃ dans le produit issu de l'étape (ii) et éliminer le produit présentant un rapport de quantité de SO₃ du cru décarbonaté / quantité de SO₃ dans le produit issu de l'étape (ii) inférieur ou égal à 0,75 et supérieur ou égal à 1,2;
(v) mesurer la quantité de chaux libre (CaOl) dans le produit issu de l'étape (ii) et éliminer le produit ayant une quantité de chaux libre strictement supérieur à 1,5 %, pourcentage en masse de chaux libre dans le produit issu de l'étape (ii).

2. Procédé selon la revendication précédente **caractérisé en ce qu'**il comprend une étape de précalcination du cru.

3. Procédé selon l'une des revendications précédentes **caractérisé en ce que** l'étape (i) est réalisée à partir d'un four rotatif ou un four électrique ou un four à passage ou tout autre type de four de cimenterie.

4. Procédé selon l'une des revendications précédentes **caractérisé en ce que** à l'étape (iv), le produit issu de l'étape (ii) présentant un rapport de quantité de SO₃ du cru décarbonaté / quantité de SO₃ dans le produit issu de l'étape (ii) égal à 1 n'est pas éliminé.

5. Procédé selon l'une des revendications précédentes **caractérisé en ce que** à l'étape (v), le produit issu de l'étape (ii) ayant une quantité de chaux libre strictement supérieur à 1% est éliminé, pourcentage en masse de chaux libre dans le produit issu de l'étape (ii).

## Patentansprüche

1. Verfahren zur Herstellung eines Klinkers, umfassend 40 bis 75 % Belit, ausgedrückt in Masse-% bezogen auf die Gesamtmasse des Klinkers, umfassend die folgenden Schritte:
(i) Einführen eines Rohmehls in eine Kalzinierkammer eines Zementofens, wobei das Rohmehl mindestens eine Kalziumquelle, eine Siliciumquelle, eine Aluminiumquelle, eine Eisenquelle, eine Schwefelquelle und eine Borquelle umfasst;
(ii) Kalzinieren des Rohmehls bei einer Temperatur im Bereich von 1150°C bis 1375°C;
(iii) Messen des Litergewichts des aus Schritt (ii) hervorgehenden Produkts und Entfernen des Produkts, das ein Litergewicht von streng kleiner als 650 g/Liter aufweist;
(iv) Messen der SO₃-Menge in dem aus Schritt (ii) hervorgehenden Produkt und Entfernen des Produkts, das ein Verhältnis von SO₃-Menge des entkohlten Rohmehls zur SO₃-Menge in dem aus Schritt (ii) hervorgehenden Produkt von kleiner oder gleich 0,75 und größer oder gleich 1,2 aufweist;
(v) Messen der Menge an freiem Kalk (CaOl) in dem aus Schritt (ii) hervorgehenden Produkt und Entfernen des Produkts, das eine Menge an freiem Kalk von streng größer als 1,5 Masse-% an freiem Kalk in dem aus Schritt (ii) hervorgehenden Produkt aufweist.

2. Verfahren nach dem vorhergehenden Anspruch, **dadurch gekennzeichnet, dass** es einen Schritt zum Vorkalzinieren des Rohmehls umfasst.

3. Verfahren nach einem der vorhergehenden Ansprüche, **dadurch gekennzeichnet, dass** Schritt (i) ausgehend von einem Drehofen oder einem Elektroofen oder einem Durchlaufofen oder jeder anderen Art von Zementofen ausgeführt wird.

4. Verfahren nach einem der vorhergehenden Ansprüche, **dadurch gekennzeichnet, dass** in Schritt (iv) das aus Schritt (ii) hervorgehende Produkt, das ein Verhältnis von SO₃-Menge des entkohlten Rohmehls zur SO₃-Menge in dem aus Schritt (ii) hervorgehenden Produkt von gleich 1 aufweist, nicht entfernt wird.

5. Verfahren nach einem der vorhergehenden Ansprüche, **dadurch gekennzeichnet, dass** in Schritt (v) das aus Schritt (ii) hervorgehende Produkt, das eine Menge an freiem Kalk von streng größer als 1 Masse-% an freiem Kalk in dem aus Schritt (ii) hervorgehenden Produkt aufweist, entfernt wird.

## Claims

1. Method for producing clinker comprising from 40 to 75% of belite, in % by mass based on the total mass of clinker, comprising the following steps:
(i) introducing a raw meal into a calcining chamber of a cement-plant kiln, the raw meal comprising at least a source of calcium, a source of silica, a source of alumina, a source of iron, a source of sulphur and a source of boron;
(ii) calcining the raw meal at a temperature from 1150°C to 1375°C;
(iii) measuring the weight per litre of the product obtained from step (ii) and eliminating the product having a weight per litre strictly below 650 g/litre;
(iv) measuring the amount of SO₃ in the product obtained from step (ii) and eliminating the product having a ratio of the quantity of SO₃ in the decarbonated raw meal / quantity of SO₃ in the product obtained from step (ii) which is less than or equal to 0.75 and greater than or equal to 1.2;
(v) measuring the quantity of free lime (CaOl) in the product obtained from step (ii) and eliminating the product having a quantity of free lime strictly greater than 1.5% by mass of the free lime in the product obtained from step (ii).

2. Method according to the preceding claim, **characterised in that** it comprises a step of pre-calcining the raw meal.

3. Method according to one of the preceding claims, **characterised in that** step (i) is carried out using a rotary kiln or an electric kiln or a continuous kiln or any other type of cement-plant kiln.

4. Method according to one of the preceding claims, **characterised in that** in step (iv) the product obtained from step (ii) having a ratio of the quantity of SO₃ in the decarbonated raw meal / quantity of SO₃ in the product obtained from step (ii) equal to 1 is not eliminated.

5. Method according to one of the preceding claims, **characterised in that** in step (v) the product obtained from step (ii) having a quantity of free lime strictly greater than 1% is eliminated, in percent by mass of free lime in the product obtained fromstep (ii).
